(19) Europäisches Patentamt
European Patent Office
Office européen des brevets

(11) **EP 4 765 611 A1**

(12) **EUROPEAN PATENT APPLICATION**

(43) Date of publication:
**24.06.2026 Bulletin 2026/26**

(21) Application number: **24222749.4**

(22) Date of filing: **23.12.2024**

(51) International Patent Classification (IPC):
*H02M 3/156* (2006.01)  *H02M 7/48* (2007.01)
*H02M 1/34* (2007.01)  *H02M 1/44* (2007.01)
*H02M 1/00* (2006.01)

(52) Cooperative Patent Classification (CPC):
**H02M 3/156; H02M 1/0064; H02M 1/348;
H02M 1/44; H02M 7/48**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Syddansk Universitet
5230 Odense M (DK)**

(72) Inventor: **Babaki, Amir
5230 Odense M (DK)**

(74) Representative: **Høiberg P/S
Adelgade 12
1304 Copenhagen K (DK)**

(54) **MAGNETIC SNUBBER METHOD AND SYSTEM IN HIGH-SPEED CONVERTERS**

(57) The present disclosure relates to a switching converter assembly comprising: a circuit structure; a voltage conversion portion comprising at least one high-speed switch and a power loop configured for converting an input voltage to an output voltage, wherein the power loop is arranged on a first side of the circuit structure; a magnetic snubber portion configured to suppress a voltage overshoot and a ringing time caused by distributed stray inductance in the power loop and the turning off of the high speed switch, the magnetic snubber portion comprising: a magnetic loop possessing a planar inductance connected in series to a resistive element, wherein the magnetic loop is arranged on a second side of the circuit structure or in a secondary circuit structure isolated from the circuit structure. The present disclosure further relates to methods for suppressing a voltage overshoot and a ringing time in a switching converter.

**EP 4 765 611 A1**

## Description

The present disclosure relates to the field of snubber circuits designed for high-speed power converters, especially those utilizing Wide Band Gap (WBG) semiconductors such as SiC and GaN MOSFETs.

## Background

In the field of power electronics, achieving efficient and reliable high-speed switching is a primary goal, especially with the advancement of Wide Band Gap (WBG) semiconductors like silicon carbide (SiC) and gallium nitride (GaN) MOSFETs. These materials enable higher switching frequencies, high-speed switching resulting low switching loss, improved power densities, and operation at elevated temperatures, making them well-suited for applications demanding fast switching and high efficiency. To mitigate issues associated with high-speed switching, such as electromagnetic interference (EMI) and voltage spikes, snubber circuits are commonly employed. Traditional snubber designs, such as capacitor-based or resistor-capacitor (RC) circuits, reduce overshoot and oscillations, thereby extending component lifespans and enhancing the reliability of switching devices.

Despite their widespread use, conventional snubber circuits present notable disadvantages, especially when paired with high-speed WBG switches. Capacitor-based snubbers, for instance, introduce delays in the switching process due to the inherent time constant of the capacitor's charging and discharging cycle. This delay inherently results in power loss, which is not desirable in switching converters, in particular so in WBG switches, which are intended for lower power loss and high efficiency. This delay can therefore conflict with the objective of utilizing high-speed switches, limiting the full performance potential of WBG semiconductors. Furthermore, the use of resistive elements in traditional snubbers leads to energy losses, reducing overall efficiency and generating additional heat. Consequently, conventional snubbers may diminish both the speed and efficiency advantages that WBG switches are designed to offer.

Capacitor-based snubbers are often unable to manage the high voltage change rates (dv/dt) associated with modern high-speed converters, leading to insufficient suppression of voltage spikes and prolonged oscillation periods. This results in residual ringing within the system, which can impose additional stress on components and, in extreme cases, cause circuit failure. In high-power applications, this challenge is amplified, as the constraints of traditional snubbers become more pronounced, limiting their suitability for next-generation high-speed, high-power converters. These limitations highlight the need for a more adaptable, efficient, and delay-free snubber solution that can fully support the capabilities of modern WBG semiconductors.

Hence, there is a need for improved snubber designs to suppress high-frequency oscillations and spikes without introducing delays, and as such facilitate reliable use of high-speed switches in high-power converters while ensuring compatibility with advanced WBG technologies.

## Summary

The present disclosure relates to a switching converter assembly comprising:

a circuit structure; a voltage conversion portion comprising at least one high-speed switch and a power loop configured for converting an input voltage to an output voltage, wherein the power loop is arranged on a first side of the circuit structure;
a magnetic snubber portion configured to suppress a voltage overshoot and a ringing time caused by distributed stray inductance in the power loop and the turning off of the high speed switch, the magnetic snubber portion comprising: a magnetic loop possessing a planar inductance connected in series to a resistive element, wherein the magnetic loop is arranged on a second side of the circuit structure or in a secondary circuit structure isolated from the circuit structure.

The utilization of a magnetic snubber circuit comprised in a secondary circuit structure isolated from the main circuit structure provides significant design and application advantages compared to traditional snubber circuit architectures. The present disclosure improves substantially on the issue of a delay or lag in switching times encountered in traditional capacitive snubbers. This makes the magnetic snubber circuit in the present disclosure particularly relevant for high frequency and high-speed switches, in which traditional snubber designs fall short by having too high energy losses to be practically applicable.

The present disclosure provides systems and methods to achieve efficient suppression of high-frequency voltage oscillations in power converters operating with high-speed switches, especially those incorporating Wide Band Gap (WBG) semiconductors. By using a magnetic snubber circuit with components that form an isolated loop, the present disclosure enables energy generated by switching oscillations to be transferred from the main circuit to the snubber circuit without introducing significant switching delays. The magnetic loop configuration eliminates the need for capacitive elements in the snubber circuit, which traditionally introduce delay during charging and discharging. Implementing the inductive element in an isolated layer with multiple windings helps to efficiently dissipate energy from oscillations and reduces the incidence of overshoot and long ringing times, which would otherwise lead to component stress, circuit instability, and even circuit failure.

The present disclosure also relates to a method for suppressing voltage spikes and ringing oscillations by integrating the magnetic snubber circuit in an isolated PCB layer, with the resistive and inductive elements connected in series. The layer is implemented to have a number of windings with a shape substantially similar to the main circuit's inductive element, facilitating efficient energy transfer and thereby reducing voltage overshoot and oscillations. This configuration allows the snubber circuit to be tuned to specific converter parameters, making it adaptable to a variety of high-speed, high-power applications where stability and efficiency are critical. The method thus offers an efficient approach to control high-speed switching transients, supporting the reliable use of high-speed WBG switches in high-frequency power-conversion systems.

### Brief description of drawings

Various embodiments are described hereinafter with reference to the drawings. The drawings are examples of embodiments and are intended to illustrate some of the features of the presently disclosed method and system for magnetic snubber circuits in high-speed converters, and are not limiting to the presently disclosed method and system.

FIG. 1 shows an example of a circuit of a switching converter assembly comprising a magnetic snubber portion as applied to voltage conversion portion being a half-bridge.

FIG. 2 shows an experimental setup comprising a double-layer PCB, wherein the bottom side comprises a magnetic snubber portion which comprises a magnetic loop.

FIG. 3A shows a coupling circuit model equivalent to the circuit of FIG. 1.

FIG. 3B shows a coupling circuit model equivalent to the circuit of FIG. 1, using current controlled voltage sources.

FIG. 4A shows an example of a three-dimensional (3D) model of the voltage conversion portion of the front side of a switching assembly.

FIG. 4B shows an example of a three-dimensional (3D) model of magnetic snubber portion of the backside of a switching assembly.

FIG. 5A shows an example of the switch voltage $V_{dc}$ (V) as a function of time for a simulated switching assembly without a magnetic snubber portion.

FIG. 5B shows an example of the switch voltage $V_{dc}$ (V) as a function of time for a simulated switching assembly with a magnetic snubber portion.

FIG. 6A shows an example of the voltage overshoot (%) of a simulated switching assembly as a function of the magnetic snubber inductance $L_s$ ($\mu$H).

FIG. 6B shows an example of the ringing time of a simulated switching assembly as a function of the magnetic snubber inductance $L_s$ ($\mu$H).

### Detailed description

*Definitions*

"Circuit structure": This term refers to a broad category of electronic frameworks or assemblies designed to facilitate the flow, control, and conversion of electrical signals or power. A circuit structure may comprise one or more conductive pathways, electrical components, and supporting substrates or housings. It can comprise a variety of configurations such as printed circuit boards (PCBs), integrated circuits (ICs), or combinations thereof, and may be implemented as single-layer, multi-layer, or modular assemblies.

This definition is intended to cover both rigid and flexible circuit architectures, as well as structures formed using traditional materials like FR4 or advanced composites such as ceramics and flexible polymers. Circuit structures may support a range of functionalities, including but not limited to signal routing, voltage conversion, or the integration of active and passive components. They may also incorporate features like thermal management systems, shielding layers, or conductive vias for enhanced performance and reliability.

In the context of the present disclosure, the term circuit structure is used broadly to ensure compatibility with diverse electronic applications and designs. For example, the structure may be tailored for use in high-speed switching environments, where specific parameters like inductance, resistance, and material properties are optimized to support efficient power transfer and minimize electromagnetic interference. This flexible interpretation allows for the inclusion of innovative and unconventional electronic platforms that align with the principles and objectives described in the disclosure.

"Planar inductance": This refers to an inductive property of a conductor or conductive loop that is formed primarily within a two-dimensional or planar structure. Planar inductance arises due to the generation of magnetic fields around current-carrying pathways embedded or arranged within flat or substantially flat surfaces, such as in printed circuit boards (PCBs) or integrated circuits (ICs). The current-carrying pathways may also be embedded or arranged within surfaces that have various degrees of curvature, such as in bendable, elastic materials.

This term encompasses inductance created by conductive traces, windings, or loops that are configured to optimize coupling, energy transfer, or suppression of oscillations within the constraints of a planar geometry. Planar inductance may be influenced by factors such as the shape, dimensions, spacing of conductive paths, and the properties of the surrounding dielectric or substrate materials.

Planar inductance is broadly applicable to a range of electronic systems, particularly those requiring compact, low-profile designs. It may be utilized for energy storage, filtering, or coupling in systems such as high-frequency converters, magnetic snubbers, or signal transmission lines. Variations may include single-layer planar designs, multilayered arrangements, or configurations integrated into complex electronic assemblies to achieve desired inductive performance.

"Magnetic loop": This refers to a closed or substantially closed conductive pathway that generates and interacts with magnetic fields when carrying an electric current. The magnetic loop is typically designed to facilitate inductive coupling, enabling the transfer or dissipation of energy through electromagnetic interactions with nearby circuits or components. It may be implemented in various forms, such as wire windings, etched conductive traces, or integrated conductive elements within planar or three-dimensional structures.

The term broadly includes configurations used in applications like energy transfer, oscillation suppression, or magnetic coupling in electronic systems. Magnetic loops may vary in size, shape, and material composition to suit specific operational requirements, such as enhancing inductive coupling strength, minimizing energy losses, or optimizing spatial arrangements in compact electronic assemblies. This definition is inclusive of both standalone loops and those embedded in circuit structures, ensuring applicability across diverse technologies.

"SMD" or "Surface Mounted Device": This refers to an electronic component designed to be mounted directly onto the surface of a printed circuit board (PCB) rather than through a hole. SMDs are typically compact, lightweight, and support automated assembly processes, making them suitable for high-density and miniaturized electronic designs.

"Voltage overshoot": This refers to the value of the switch voltage shortly after a switch-on of the voltage switch. In non-ideal scenarios, the voltage will increase beyond the steady-state value in an overshoot and thereafter relax towards the steady-state value over some characteristic time scale. The relaxation may or may not comprise oscillations in the voltage.

"Ringing time": This refers to the time elapsed from the turn-off of a high-speed switch until the output voltage stabilizes and remains within a specified error band of the steady-state value. This duration accounts for the damping of transient oscillations or "ringing" following a switching event. This term is sometimes used synonymously with "settling time".

"Inductive coupling": The inductive coupling is a dimensionless number, quantifying the fraction of any initial magnetic field resulted by a current in one loop, such as the power loop, being picked up by an inductively coupled loop, such as the magnetic loop.

"WBG": Wide Band Gap materials, typically Wide Band Gap semiconductors. These are semiconductors with a larger band gap than conventional semiconductors. Conventional semiconductors, like silicon and selenium, have a bandgap of around 0.5-1.5 eV, whereas wide band gap materials have band gaps of around 2 eV or more. Typically, wide band gap semiconductors thus have electronic properties which makes them fall between those of conventional semiconductors and insulators.

"SiC": Silicon carbide, sometimes denoted by carborundum. This is a hard chemical compound containing silicon and carbon, and it belongs to the class of wide band gap semiconductors.

"GaN": Gallium nitride. This is a hard chemical compound containing gallium and nitrogen, and it belongs to the class of wide band bap semiconductors. The material has a band gap of around 3.4 eV.

*Further details*

Embodiments of the invention are associated with various advantages and/or technical effects.

The present disclosure concerns a switching converter assembly comprising: a circuit structure; a voltage conversion portion comprising at least one high-speed switch and a power loop configured for converting an input voltage to an output voltage, wherein the power loop is arranged on a first side of the circuit structure; a magnetic snubber portion configured to suppress a voltage overshoot and a ringing time caused by distributed stray inductance in the power loop and the turning off of the high speed switch, the magnetic snubber portion comprising: a magnetic loop possessing a planar inductance connected in series to a resistive element, wherein the magnetic loop is arranged on a second side of the circuit structure or in a secondary circuit structure isolated from the circuit structure.

One advantage of the magnetic snubber in the present disclosure is that it does not introduce a delay in the switching times and thereby enables operation in high-speed switches. Another advantage of the magnetic snubber in the present disclosure is that it facilitates compact layouts and designs that reduces production complexity and enhances applicability potential and affordability, in particular with respect to electronic converters with high switching speed and high efficiency.

In one embodiment of the present disclosure, the magnetic loop has substantially the same shape as the power loop. Configuring the magnetic loop to mirror the shape of the power loop provides advantages in terms of the inductive coupling between the two circuits. This matching shape enhances spatial alignment, leading to more effective energy transfer from the power loop to the magnetic snubber circuit. When the magnetic loop follows a similar physical layout to the power loop, the inductive coupling strength increases, allowing for efficient suppression of voltage oscillations. This approach is particularly useful in high-speed applications, where rapid response times can be important for protecting circuit components from damage due to transient voltage spikes.

This similar shape configuration enables the magnetic loop to track the power loop's electrical pathways within the main circuit structure, aligning with the primary current paths to improve magnetic flux linkage. By positioning the magnetic loop in parallel with the power loop's shape, the system enhances magnetic field interaction, allowing oscillation energy to be quickly transferred and dissipated. This design also facilitates maintaining a compact and optimized layouts, which may be useful in high-power and high-frequency applications. Furthermore, this spatial alignment of the magnetic and power loops may also reduce unwanted parasitic elements that could otherwise interfere with the snubber circuit's effectiveness.

Variations in the magnetic loop's shape can be made for applications with specific performance needs or physical constraints. For instance, minor adjustments in the dimensions or slight offsets in positioning may be introduced to enhance coupling for particular load conditions or operational frequencies. The adaptable nature of this configuration allows it to be applied flexibly across various designs while preserving the advantages of high inductive coupling strength. This approach ultimately improves both the efficiency and reliability of voltage suppression, even under different environmental or operational conditions, by reducing the likelihood of residual ringing or overshoot.

In one embodiment of the present disclosure, the magnetic loop is located directly above or below the power loop. Positioning the magnetic loop in close proximity, either directly above or below the power loop of the main circuit structure, optimizes the coupling efficiency. This spatial arrangement minimizes physical separation between the loops, strengthening the inductive link necessary for effective energy transfer during switching. By reducing the distance between the magnetic and power loops, the snubber circuit can quickly respond to voltage oscillations, thus providing immediate energy dissipation and enhancing overall system stability.

This configuration is especially advantageous for high-speed and high-power density converters that require rapid dissipation of oscillation energy without occupying additional space. Placing the magnetic loop on a secondary side of the main circuit structure directly adjacent to the power loop offers a compact and efficient solution that ensures strong magnetic coupling, facilitating effective suppression of transient spikes without adding significant complexity to circuit structure layout. Variations in placement can be tailored to optimize coupling strength based on the specific characteristics of the device and its intended operational environment. For instance, slight shifts in lateral positioning or adjustments to the vertical distance between layers can be implemented to maximize inductive efficiency.

The magnetic loop may also be located in a separate circuit structure electronically isolated from the primary circuit structure containing the power loop. Since the magnetic snubber circuit is functional as a separate entity when brought in proximity to a primary circuit, this option allows for flexibility in design and inductive coupling variations are required or beneficial. In such cases, the magnetic loop functions as a modular electronic component that may be moved and adjusted to proximity-couple to various parts of one or more primary circuit structures in which voltage overshoot or ringing time reduction are sought.

In cases where physical constraints or thermal considerations require adjustments to the design, the magnetic loop's location may be modified slightly to accommodate these factors. Such adjustments may help to fine-tune the coupling strength or adapt the design to different materials used in the primary and/or secondary circuit structure. By enabling proximity-based coupling without substantial modification to the overall circuit layout, this embodiment provides a versatile and efficient solution for inductive snubber integration in modern high-speed power converters.

In one embodiment of the present disclosure, the circuit structure and the magnetic snubber portion are implemented into a first and a second side of a double-layer PCB, respectively. The integration of the magnetic snubber and the power loop on opposite sides of a double-layer PCB enables efficient use of PCB space while enhancing the magnetic coupling needed for energy transfer during switching. This double-layer configuration allows for direct alignment of the snubber circuit with the power loop, promoting strong inductive coupling between the circuits and leading to effective suppression of oscillation energy. Implementing the snubber on a separate layer in this manner ensures that minimal space is required for additional components, making the design compact and adaptable to various high-power, high-frequency applications such as applications that mainly use high-speed switches.

By allocating the magnetic snubber portion to a distinct layer opposite the power loop, the double-layer PCB design minimizes interference between the circuits. This physical separation provides electrical isolation and flexibility in optimizing each layer individually to meet the requirements of its respective circuit elements, whether for magnetic coupling, thermal dissipation, or noise reduction. In practice, this double-layer configuration enhances the reliability and efficiency of the circuit, as each layer can be tailored for optimal performance without compromising the overall PCB layout or increasing production complexity.

The double-layer approach also allows for cost-effective manufacturing, as the design remains straightforward while providing significant performance advantages. In addition, the spatial separation of the layers reduces cross-talk and electromagnetic interference, as each circuit layer can be tuned specifically for its function. This configuration is particularly useful in applications requiring high power densities and efficient space utilization, where the double-layer design offers a balance of compactness and functionality, contributing to improved energy transfer, faster response times, and reduced oscillation amplitudes in the converter.

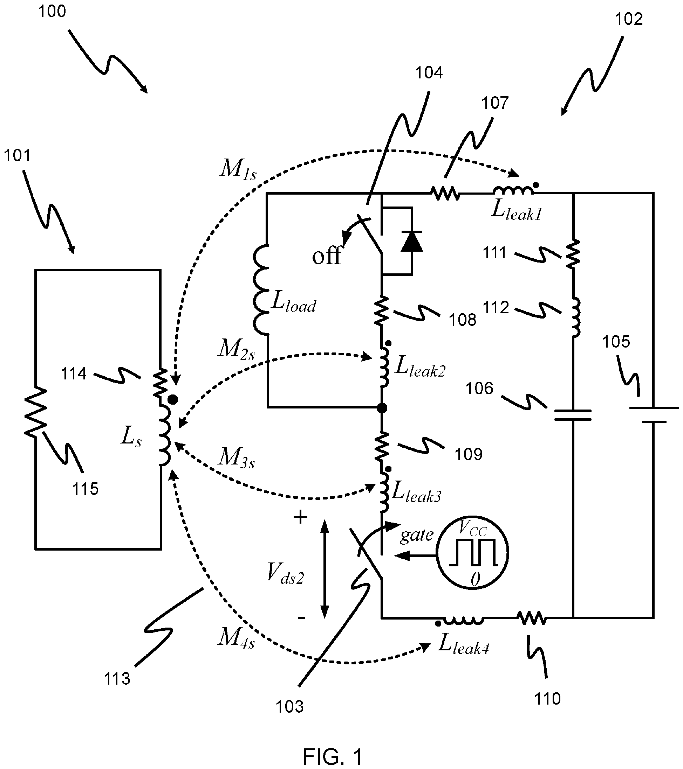

In one embodiment of the present disclosure, the power loop on the first side of the circuit structure further comprises a DC link, a leg of the high-speed switch, and a power track that connects the leg of the high-speed switch to the DC link. This arrangement of the power loop components enhances current flow efficiency and is suited for high-speed switching applications. By including the DC link in the power loop and connecting it directly to the switch leg, the configuration allows for stable current transitions and minimizes the latency within the power loop. This results in a circuit design that is well-prepared for rapid voltage shifts. An example of this embodiment is shown in FIG. 1.

The direct connection of the power track between the DC link and the switch leg is advantageous, as it supports rapid current flow and minimizes any impedance that could hinder switching performance. By configuring the power loop with this structure, the circuit gains stability and achieves a reduction in overshoot during high-speed switching events when coupled to the magnetic snubber circuit. This arrangement can be valuable in high-frequency applications, where stable current paths contribute to a consistent performance profile across varying load conditions.

In addition, integrating the DC link within the power loop supports the overall voltage stability of the main circuit, helping to absorb residual voltage spikes and smoothing out transient fluctuations. Variations of this embodiment may include modifications in the power track layout to accommodate different component placements or PCB configurations. By providing a robust and reliable current path, this power loop design enhances the overall efficiency and lifespan of the converter system, enabling it to operate reliably under the demanding conditions associated with high-speed switching in WBG semiconductors.

In one embodiment of the present disclosure, the at least one high-speed switch is of the type Wide Band Gap (WBG) switches, comprising either SiC or GaN MOSFET. Utilizing WBG semiconductors such as silicon carbide (SiC) and gallium nitride (GaN) MOSFETs provides significant advantages for high-speed, high-power switching applications. These WBG materials are well-suited for operating at elevated frequencies, making them ideal for applications requiring efficient and rapid switching. By incorporating these advanced switches, the system can operate at higher frequencies with reduced switching losses, ultimately improving the converter's efficiency. The inclusion of WBG switches in the system supports the overall design intent of minimizing delays and energy dissipation while maintaining high performance.

The choice of WBG switches enables the snubber circuit to address high dv/dt stresses that are typical in high-speed switching environments. SiC and GaN MOSFETs are known for their ability to withstand higher voltage changes without degradation, allowing the system to suppress voltage overshoots more effectively. Additionally, the robustness of these materials ensures that they can handle the high thermal loads often generated during fast switching, thus extending the lifespan of the switch and reducing maintenance requirements. The inherent properties of SiC and GaN, specifically the large electronic band gaps of these systems compared to conventional semiconductors, facilitate an enhanced response to switching events, further benefiting the magnetic snubber circuit's performance.

Implementing WBG switches in this system opens possibilities for various high-power applications, such as renewable energy converters, automotive systems, and industrial power supplies, where efficiency and reliability are required. Variations of this embodiment might include different types of WBG devices, such as Schottky diodes or other transistors that offer similar advantages in high-speed environments. This flexibility allows the system to adapt to specific application needs while leveraging the benefits of WBG materials to maintain high efficiency and reliability.

In one embodiment of the present disclosure, the resistive element is a Surface Mounted Device (SMD) resistor. Using an SMD resistor as the resistive element in the magnetic snubber circuit provides practical and technical advantages in terms of size, thermal management, and integration with the layout, such as onto a PCB. SMD resistors are compact and allow for precise placement, minimizing the space required for the snubber circuit and enabling efficient heat dissipation. This placement flexibility is particularly beneficial in high-density designs, where space constraints are significant, and efficient layout design is essential for optimal performance.

The SMD resistor's small shape and compact geometry facilitates higher routing density and more compact designs of the magnetic snubber. By using an SMD resistor, the magnetic loop can quickly dissipate the oscillation energy transferred from the power loop, reducing the time it takes to stabilize the voltage and minimizing the potential for harmful overshoots. Additionally, SMD resistors can be selected based on power ratings that match the specific energy dissipation needs of the system, providing a scalable solution that can be adjusted for different operational requirements.

This choice of SMD resistors also supports automated manufacturing processes, as they are compatible with standard surface-mount technology (SMT) techniques. This compatibility not only reduces assembly costs but also enhances consistency and reliability in production. Alternative implementations might include different resistor types, such as through-hole resistors, if space permits, or resistors with specialized thermal properties for high-power applications. The versatility of this configuration enables the system to meet various design criteria while maintaining effective oscillation suppression.

In one embodiment of the present disclosure, the power loop comprises at least one DC/DC converter or at least one DC/AC inverter. Configuring the power loop to incorporate either a DC/DC converter or a DC/AC inverter makes the system versatile across a wide range of power conversion applications. DC/DC converters and DC/AC inverters are commonly used in power electronics for applications that require voltage regulation, load isolation, or frequency transformation, such as renewable energy systems, electric vehicles, and industrial automation. By integrating these converters, the system can adapt to diverse requirements, ensuring that the snubber circuit remains effective in managing oscillations across different power formats.

The inclusion of DC/DC and DC/AC converters in the power loop also allows the snubber circuit to address specific operational challenges associated with each type. For instance, DC/AC inverters often require careful management of harmonic content and transient suppression, which the snubber circuit can help control by minimizing voltage spikes and reducing ringing times. Similarly, in DC/DC applications, the snubber circuit can mitigate or eliminate voltage oscillations that arise from fast switching, thereby protecting the switch from failure, burn, or burst, which can be important for applications demanding precise voltage control.

This embodiment may include variations where multiple converters are configured in series or parallel, depending on the power and voltage requirements of the application. The ability to integrate with both types of converters ensures that the magnetic snubber circuit can be employed in a range of power electronics systems, providing flexibility and adaptability in both AC and DC environments and across multiple industries.

In one embodiment of the present disclosure, the magnetic loop is magnetically coupled to the power loop via planar or inductive coupling techniques. Such inductive coupling techniques comprise winding wires or electronic paths into a coil and proximity-inducing a magnetic field generated by one electronic unit, which may also be a coil or some other effectively inductive unit, into the coil as dictated by Maxwell's equations. By using planar or inductive coupling techniques, the system enables efficient magnetic coupling between the magnetic loop and the power loop, facilitating effective energy transfer during switching events. Planar coupling allows the magnetic loop to be positioned parallel to the power loop, ensuring a consistent magnetic field interaction that enhances energy dissipation in the snubber resistor instead of energy dissipation across the high-speed switch. Inductive coupling, on the other hand, can provide flexibility in positioning by allowing the loops to be aligned in various configurations while still achieving high coupling efficiency.

These coupling techniques enhance the system's ability to respond quickly to switching transients by maximizing the energy transfer rate between the loops. The magnetic coupling ensures that oscillation energy is effectively transferred to the snubber circuit, where it is dissipated, reducing the impact of voltage overshoots and ringing. Planar coupling is particularly useful in compact designs, as it allows the system to maintain a low profile on the PCB, whereas inductive coupling provides versatility for applications with more complex layouts.

Variations in this embodiment may involve adjusting the spacing, orientation, or alignment of the loops to optimize the coupling strength based on specific application requirements. For instance, closer spacing may be used in high-frequency applications so long as it increases the inductive coupling, while an offset configuration may be employed where space constraints are more important. These adaptable coupling techniques ensure the system can maintain performance across various PCB designs and operational conditions. The magnetic loop may also be placed inside the main power loop to enhance compactness and performance.

In one embodiment of the present disclosure, the system is further comprising self-tuning electrical components to dynamically adjust the resistance or planar inductance based on real-time switching conditions. The use of self-tuning components enables the system to adapt to fluctuating operational demands by dynamically adjusting the resistance or inductance in response to changing switching conditions and as such enhance autonomy. This adaptive capability allows the snubber circuit to maintain optimal performance, even as switching frequencies, load conditions, or voltage levels vary. By tuning the resistance or inductance, the system can improve oscillation suppression, reduce voltage overshoot, and decrease ringing times in real-time, enhancing the reliability and efficiency of the power conversion process.

Self-tuning components, such as variable resistors or inductors, provide the flexibility needed for applications where operating conditions can change rapidly, such as in renewable energy systems or electric vehicle powertrains. These components can be automatically adjusted by a control circuit that monitors parameters like switching frequency, voltage, and current, ensuring that the snubber circuit operates within optimal parameters for each condition. This real-time adjustment minimizes energy losses and prevents component stress, contributing to the system's longevity and robustness.

In alternative implementations, the self-tuning elements could include digitally controlled components, such as digitally programmable resistors or inductors, which allow for precise and automated adjustments to the snubber circuit. This flexibility ensures that the system remains effective across a range of high-speed applications and adapts seamlessly to varying operational environments, making it highly suitable for next-generation power electronic systems.

In one embodiment of the present disclosure, a turn-on or turn-off time in the high-speed switch with the magnetic snubber portion is substantially comparable to a turn-on or turn-off time in the high-speed switch without the magnetic snubber portion, respectively. The design of the magnetic snubber circuit allows it to suppress oscillations without introducing significant delays in the switching process. This configuration is particularly advantageous in high-speed applications, as it enables the system to maintain the native switching speeds of the main switch, for example in Wide Band Gap (WBG) devices like SiC and GaN MOSFETs, which are optimized for high-frequency operation. By ensuring that the turn-on and turn-off times are comparable with or without the snubber, the system can effectively suppress voltage spikes while preserving the high-speed capabilities inherent to WBG semiconductors.

Maintaining these comparable switching times ensures that the converter's performance remains consistent, even with the addition of the snubber circuit, supporting the seamless operation of power systems requiring fast transitions. This feature may be useful in applications where switching delays can impact overall efficiency or interfere with sensitive timing requirements, such as in precise motor control or high-frequency power supplies. By avoiding any noticeable delay in switching, the magnetic snubber circuit meets the performance demands of high-speed, high-power applications while protecting the system from potential damage caused by voltage overshoot.

Possible variations of this embodiment may involve fine-tuning the inductive and resistive elements within the snubber circuit to achieve precise control over oscillation suppression while maintaining the desired switching characteristics. This design flexibility allows for optimization based on the specific performance needs of the application, whether that involves minimizing response time, reducing component stress, or enhancing overall efficiency.

In one embodiment of the present disclosure, a snubber time constant, defined as the ratio of the snubber circuit inductance to the magnetic snubber portion resistance, is substantially shorter than a switching period of the at least one high-speed switch. A shorter snubber time constant relative to the switching period allows the magnetic snubber circuit to respond effectively within each switching cycle, quickly dissipating energy from oscillations before the next switching event. This fast response time minimizes voltage overshoot and reduces ringing, thereby ensuring stable operation during high-frequency switching. By optimizing the time constant, the system maximizes its ability to suppress oscillations without negatively affecting the switch's timing, converter's performance, and/or efficiency.

The snubber time constant plays a critical role in determining how quickly the circuit can stabilize after a transient, particularly in environments with fast-switching WBG devices. With an appropriately short time constant, the system can immediately counteract any oscillations that occur, minimizing the risk of cumulative voltage stress on the switch. This quick dissipation of energy is beneficial in high-speed applications where maintaining consistent voltage and current profiles is essential for reliable operation. Additionally, a shorter time constant reduces the likelihood of resonance effects within the circuit, further stabilizing the performance.

Variations in this configuration might include adjustments to the values of the inductive and resistive elements to fine-tune the time constant based on the specific switching frequency and power requirements of the application. For instance, in converters operating at extremely high frequencies, reducing the inductance or increasing the resistance within the snubber may be advantageous to achieve an optimal balance of response speed and energy dissipation.

In one embodiment of the present disclosure, the magnetic loop comprises a number of windings, wherein the number of windings is chosen to maximize an inductive coupling between the power loop and the magnetic loop. The number of windings in the magnetic loop can significantly impact the inductive coupling strength with the power loop, as additional windings increase the magnetic flux linkage between the loops. By carefully selecting the number of windings, the system can enhance energy transfer efficiency, ensuring that oscillation energy is rapidly absorbed and dissipated within the snubber circuit. This configuration is particularly effective for high-power, high-frequency switching applications, where strong coupling is necessary to manage transient voltage spikes effectively.

Optimizing the winding count allows for adjustments based on the specific requirements of the power loop and the operational frequency of the converter. Depending on circumstances and parameters such as the power loop inductance in particular, increasing the number of windings may increase the mutual inductive coupling efficiency by boosting the effective magnetic field strength. In other cases, decreasing the number of windings may effectively increase the mutual inductive coupling. A high mutual inductive coupling can be important for achieving rapid energy dissipation and minimizing voltage oscillations.

The winding count may be adjusted to balance performance with space constraints or manufacturing considerations, ensuring that the magnetic snubber circuit remains compact and feasible for integration into, for example, high-density PCB layouts. A consideration that may go into choosing the number of windings is that a high planar winding number tends to decrease the effective snubber loop cross section to which the power loop inductively couples. Hence, increasing the number of windings is typically beneficial up to a certain extent, beyond which factors such as material usage, compactness, and internal resistance counteract the overall performance of the snubber circuit. The precise winding count may vary, depending on application from a few to tens and hundreds.

In alternative embodiments, the windings may be configured with different geometries, such as helical or planar layouts, to further enhance coupling based on spatial or functional requirements. The adaptability of the winding count and shape ensures that the system can be tailored for various high-speed applications, achieving maximum inductive coupling while maintaining a compact and efficient design.

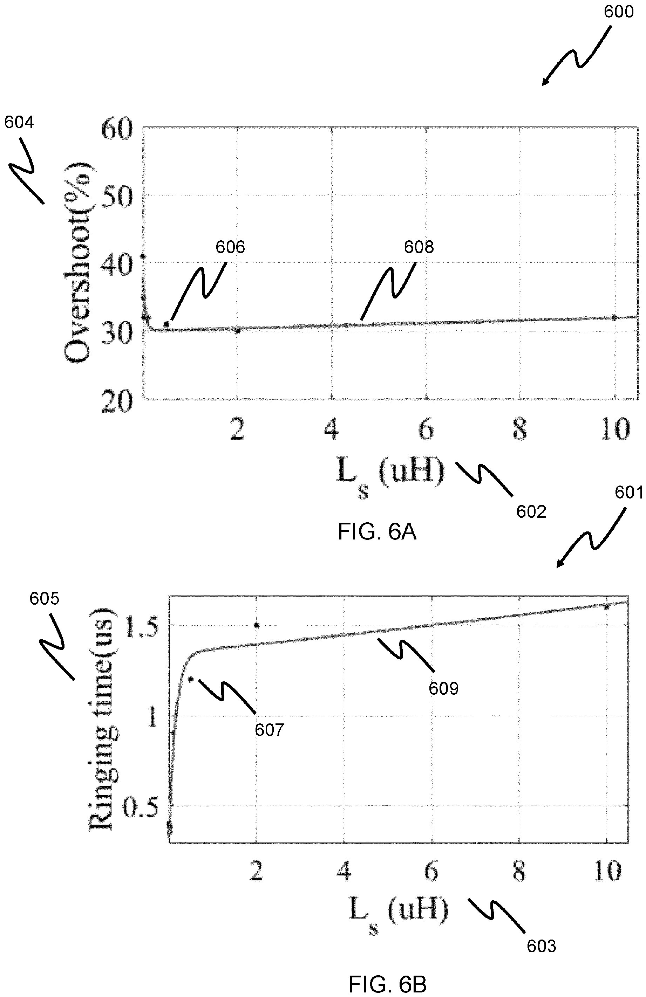

In one embodiment of the present disclosure, an inductive coupling between the magnetic loop and the power loop is at least 0.1, preferably at least 0.5, most preferably at least 0.9. At higher coupling coefficients, such as 0.5 or 0.9, the energy transfer is more efficient, which translates to faster voltage suppression and improved overall stability of the converter system. This high coupling efficiency is beneficial for high-speed applications where even minor delays in energy dissipation could affect performance. The ringing time as a function of the magnetic loop's inductance is shown in FIG. 6B.

Variations in achieving the desired coupling coefficient could include adjustments to the loop alignment or the use of materials with higher magnetic permeability to enhance coupling. Additionally, in applications where lower coupling coefficients are adequate, design adjustments can allow for more flexibility in the layout. These variations provide a customizable approach to achieving the ideal coupling level for specific operational environments, balancing performance with design constraints.

In one embodiment of the present disclosure, the voltage overshoot of the at least one high-speed switch is at most 40% higher than the maximum voltage in steady state, preferably at most 20% higher, most preferably at most 10% higher than the maximum voltage in steady state. Controlling the voltage overshoot to within these specified limits helps protect the high-speed switch from excessive voltage stresses that can lead to degradation or failure over time. By ensuring that the voltage overshoot does not exceed 40%, and ideally remains within 20% or even 10% of the steady-state voltage, the system enhances the reliability of the switch and reduces the likelihood of damage due to high transient voltages. The voltage overshoot as a function of the magnetic loop's inductance is shown in FIG. 6A.

The ability to limit overshoot to these percentages provides significant advantages in maintaining consistent and stable operation, particularly in high-frequency converters where voltage transients can be pronounced and detrimental. With the magnetic snubber circuit effectively managing overshoot, the switch can operate within safe limits, which is especially beneficial for applications where component longevity and reliability are critical. Lower overshoot percentages reduce the need for additional protective measures, streamlining the circuit design and lowering overall system costs.

To achieve these overshoot limits, the snubber circuit's parameters-such as inductance, resistance, and coupling strength-can be precisely adjusted. Variations in this embodiment could involve tuning these parameters based on the maximum voltage ratings of the switch and the specific operational demands. This adaptability allows the system to meet stringent performance requirements while safeguarding against voltage-induced wear.

In one embodiment of the present disclosure, the ringing time, defined as the time elapsed from a turn-off of the high-speed switch until the output voltage has entered and remains within a specified error band of the steady-state value, is substantially reduced relative to non-snubber configurations. Reducing the ringing time, i.e., the ringing time, enhances the converter's overall stability, allowing it to reach steady-state operation quickly after each switching event. This reduction in ringing time minimizes fluctuations and promotes efficient power delivery.

The magnetic snubber circuit contributes to shorter ringing times by rapidly dissipating transient oscillation energy, allowing the output voltage to stabilize more quickly. This capability supports higher accuracy in voltage regulation and reduces the risk of oscillatory instability that could affect sensitive loads. In applications with stringent performance requirements, such as aerospace or industrial automation, maintaining a reduced ringing time ensures that the system can meet demanding response criteria reliably.

Variations of this embodiment may include adjusting the snubber circuit's parameters to achieve specific ringing times tailored to the operational frequency and load characteristics. By fine-tuning the snubber's inductance, resistance, or coupling strength, the system can be optimized for various applications that benefit from rapid stabilization, thereby enhancing both the efficiency and reliability of high-speed power converters.

In one embodiment of the present disclosure, the frequency of the at least one high-speed switch is at least 1 kHz, preferably at least 10kHz, most preferably at least 100kHz. Operating the high-speed switch at frequencies of at least 1 kHz, and ideally above 10kHz or 100kHz, allows the system to take full advantage of Wide Band Gap (WBG) materials, such as SiC and GaN, which are optimized for high-frequency operation. Frequencies of these orders of magnitude are also where traditional, capacitive snubber circuit are less effective due to the delay or electric inertia that are inherently present in snubber circuits containing capacitive elements.

High switching frequencies contribute to increased power density and improved efficiency, as they allow the converter to deliver stable power output more rapidly and with reduced size requirements for passive components like inductors and capacitors. This frequency range makes the system suitable for applications demanding compact design and fast response times, such as in renewable energy converters or electric vehicle power systems.

The magnetic snubber circuit supports this high-frequency operation by efficiently dissipating transient oscillation energy without introducing delays that would hinder the switch's rapid operation. By designing the snubber circuit to function effectively at the quoted frequencies, the system can maintain reliable performance even under the fast switching conditions required for modern power applications. This capability enhances the overall efficiency and stability of the converter, enabling it to meet the demands of advanced power electronics applications.

Variations of this embodiment may include adjusting the snubber's inductive and resistive elements to match the frequency range of the switch. For example, higher frequencies may require refined component values to optimize the response time of the snubber circuit, ensuring it remains effective across different operating frequencies. This adaptability enables the magnetic snubber circuit to function in various high-speed systems, providing consistent oscillation suppression across a wide range of frequencies.

In one embodiment of the present disclosure, the power of the high-speed switch is at least 100W, preferably at least 1kW. Designing the system to operate with a high-speed switch rated at powers of 100W or higher, and ideally up to 1kW or beyond, enables it to address the needs of high-power applications, such as industrial drives, grid-tied converters, and renewable energy systems. High-power switches introduce specific challenges, such as managing increased voltage and current stresses during switching events, which can lead to substantial oscillations if not properly controlled. The magnetic snubber circuit helps manage these stresses by efficiently dissipating oscillation energy, thereby protecting the switch and associated components.

The snubber circuit's ability to function effectively with high-power switches enhances its utility in applications where maintaining power integrity and preventing overshoot are critical. This capability allows the converter to deliver stable power output under challenging conditions, reducing the risk of component failure due to excessive voltage spikes or thermal stress. Furthermore, operating at higher power levels allows the system to support applications with substantial load requirements, increasing its versatility across different sectors.

Possible variations in this embodiment may involve fine-tuning the snubber circuit parameters to accommodate different power levels, ensuring that oscillation suppression remains effective as power demands increase. Adjustments in the resistance or inductance of the snubber circuit may be necessary to optimize its performance for different power classes, providing flexibility for a range of applications from mid-level power supplies to high-power industrial systems.

In one embodiment of the present disclosure, a maximal load current of voltage conversion portion is at least 1A, preferably at least 10A.

The snubber's role in managing current-related oscillations is particularly important in high-current scenarios, as transient effects can lead to component wear or degradation if not properly controlled. By dissipating excess oscillation energy quickly, the snubber circuit helps maintain a stable output current, reducing the likelihood of current spikes that could disrupt sensitive loads or contribute to thermal buildup within the components. This design consideration supports applications where high reliability and precise current regulation are necessary.

Variations of this embodiment may include adjustments to the snubber circuit to account for the converter's specific current handling capabilities, allowing it to scale for different load conditions. For instance, higher currents might necessitate changes in the winding configuration or resistance values within the snubber circuit to maintain optimal performance and ensure the system can operate reliably under varying load demands.

In one embodiment of the present disclosure, multiple magnetic snubber portions are arranged in series or parallel in high-power applications. Configuring multiple magnetic snubber circuits in series or parallel provides a scalable approach to handle higher power and current demands in large-scale or high-performance systems. Series arrangements can be used to increase the effective voltage rating of the snubber circuit, while parallel arrangements can increase its current-handling capacity. This flexibility allows the system to be customized for different high-power applications, such as industrial converters, renewable energy systems, and heavy-duty electric vehicle inverters, where both high power and high current handling are essential.

Using multiple snubber circuits in this way distributes the oscillation energy more evenly, reducing the stress on any single snubber component and enhancing the overall stability of the system. Series configurations are particularly useful in applications with elevated voltage levels, as they allow each snubber portion to share the voltage burden, thus extending the system's durability. Conversely, parallel configurations are effective in applications with high current requirements, as they allow each snubber to share the current load, preventing overload and minimizing thermal stress.

A variation of this embodiment comprises multiple magnetic snubber portions, partly connected in series and partly connected in parallel. Such configurations may be used in stations that require a trade-off in power and current demands. The plurality of magnetic snubber portions may have different internal parameters, such as resistance and/or inductance. This adaptability enhances the system's suitability for a broad range of high-power applications, ensuring efficient and reliable oscillation suppression even under demanding operational conditions.

The present disclosure also concerns a method for suppressing a voltage overshoot and a ringing time in a switching converter comprising the steps of: converting an input voltage to an output voltage using the switching converter, wherein the power loop is arranged on a first side of a circuit structure; suppressing the voltage overshoot and the ringing time caused by distributed stray inductance in the power loop and the turning off of the high-speed switch using a magnetic loop possessing a planar inductance connected in series to a resistive element, the magnetic loop arranged on a second side of the circuit structure or in a secondary circuit structure isolated from the circuit structure. This method achieves effective control of and suppression of voltage overshoot and ringing times by leveraging the inductive coupling between the power loop and the magnetic loop, ensuring that transient energy is rapidly transferred and dissipated within the magnetic snubber.

The method of the present disclosure is particularly beneficial in terms of avoiding the introduction of a delay in the switching times, as is otherwise common in conventional snubber circuit designs. Gaining and maintaining control of transient voltage spikes and current oscillations may be important to avoid detrimental stresses and even failure of electrical components in applications. The disclosed method enhances applicability, affordability, reliability, and efficiency in high-frequency switching applications.

In one embodiment of the present disclosure, the method further comprises the magnetic loop having a number of windings of substantially the same shape as the power loop of the circuit structure. Configuring the magnetic loop to have a similar shape as the power loop enhances inductive coupling by aligning the magnetic field generated in the power loop with the geometry of the magnetic loop. This alignment optimizes magnetic flux linkage and ensures efficient energy transfer from the power loop to the snubber circuit. Such a configuration is particularly beneficial in high-frequency applications, where efficient coupling is essential to suppress voltage overshoot and minimize ringing time effectively.

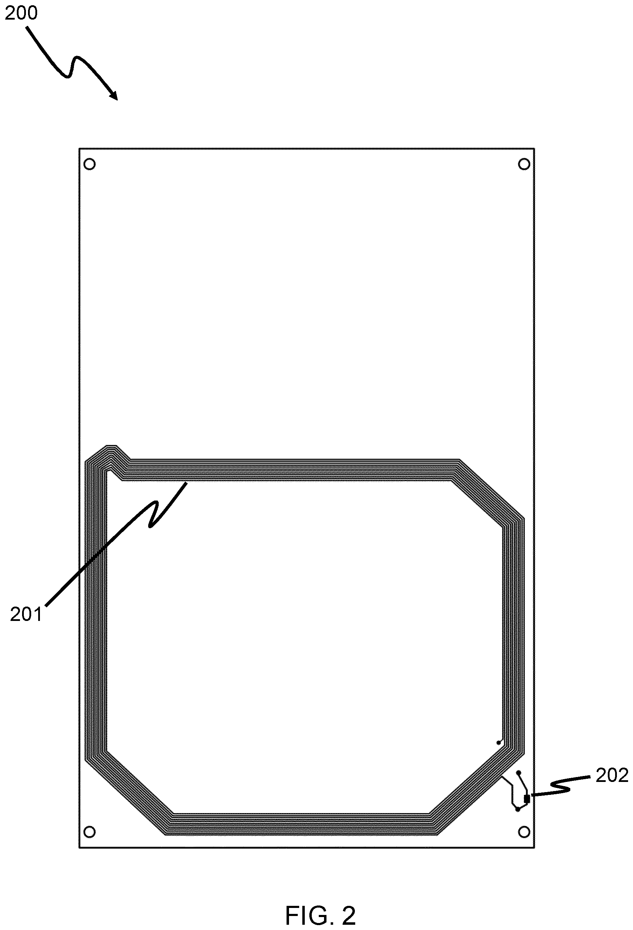

In one variation of this embodiment, the magnetic loop comprises a continuous conductive wire or an etched channel. The wire or etched channel may be arranged by having a number of windings that spiral within a plane. The windings may have an arbitrary shape. The endpoints of the wire or etched channel may be connected to form a closed loop via an electrical component, such as a surface mounted resistor or a conductive bridge or link or junction, positioned outside the aforementioned plane and configured to connect the endpoints of the innermost winding and the outermost winding. An example of this embodiment is shown in FIG. 2.

The number of windings in the magnetic loop may be adjusted to accommodate specific operational requirements, such as different switching frequencies, power levels, or space constraints. For instance, depending on the value of the planar inductance of the power loop, increasing the number of windings may increase the inductive coupling, making the system more effective in high-power applications. Conversely, reducing the number of windings may be advantageous in providing a more effective winding area and compact designs where space is limited. In some scenarios, reducing the number of windings may also increase the effective inductive coupling. Variations in the winding geometry, such as planar spirals or stacked configurations, may also be implemented to optimize performance for specific circuit layouts or thermal management needs.

Implementing a magnetic loop with a shape that mirrors the power loop also simplifies the design and manufacturing process, as it allows the use of standardized layouts and simplifies the alignment of the two loops. This approach ensures that the method is adaptable to various circuit designs and operational conditions, providing reliable oscillation suppression across a wide range of applications.

In one embodiment of the present disclosure, the method further comprises implementing the circuit structure and the magnetic snubber portion into a first and a second side of a double-layer PCB, respectively. This arrangement provides a compact and efficient design by utilizing both sides of the PCB, optimizing space utilization while maintaining strong inductive coupling between the power loop and the magnetic loop. By placing the power loop on one side and the magnetic snubber portion on the other, the method minimizes electromagnetic interference and improves thermal management.

This double-layer PCB embodiment is particularly advantageous for high-density applications, such as power converters in electric vehicles or compact industrial systems. The separation of the power loop and snubber circuit onto different layers allows for independent optimization and control of each circuit, enabling tailored adjustments to inductance, resistance, or thermal properties without compromising the other.

Additionally, this method variation supports straightforward manufacturing using standard PCB fabrication techniques, ensuring cost-effectiveness and consistency in production. Variations in the double-layer PCB implementation might include altering the thickness or material properties of the PCB to enhance thermal dissipation or improve coupling efficiency. Multi-layer PCB designs may also be explored, where additional layers could house multiple snubber or power loops for more complex systems or higher-power applications. These adaptations ensure that the method remains versatile and applicable to a broad range of high-speed, high-power circuit designs.

In one embodiment of the present disclosure, the method further comprises choosing a resistance and planar inductance of the magnetic snubber portion to minimize the voltage overshoot and/or the ringing time. By carefully selecting these parameters, the method can achieve precise control over oscillation suppression, ensuring stable operation of the switching converter even under challenging conditions. The resistance and inductance values may be tailored based on factors such as the operating frequency, power level, and load characteristics of the converter. Higher resistance values may be employed to dissipate oscillation energy more rapidly, reducing ringing time, while, depending on the power loop inductance, either lowering or increasing the magnetic loop inductance may help minimize voltage overshoot.

While increasing the magnetic snubber resistance may reduce the resulting ringing time, this increment typically results in an increase in the voltage overshoot. In some scenarios it may be beneficial to increase the magnetic snubber resistance to reduce the ringing time, and in some scenarios it may be beneficial to reduce the magnetic snubber resistance to reduce the voltage overshoot. The detailed outcome of varying the magnetic snubber resistance will in most cases depend on the precise set of circuit parameters, such as the power loop inductance.

To further enhance the performance of the snubber circuit, digitally controlled or variable resistance and inductance components may be used, enabling real-time adjustments in response to changing operating conditions.

This dynamic tuning capability ensures that the system remains effective across a wide range of scenarios, providing reliable oscillation suppression in diverse applications.

In one embodiment of the present disclosure, the method further comprises controlling the voltage overshoot and/or ringing time by adjusting the distance between the magnetic loop and the power loop. The distance between these loops directly influences the strength of their inductive coupling, allowing for fine control over energy transfer efficiency and the suppression of transient effects. Reducing the distance, albeit preferably not to zero or substantially zero, enhances magnetic coupling, improving the system's ability to dissipate oscillation energy quickly, which is beneficial for high-speed applications.

Conversely, increasing the distance between the loops may be advantageous in applications where a less aggressive coupling is needed to balance performance with other design considerations, such as thermal management or noise isolation. Adjustable mechanisms, such as movable magnetic loops or spacer materials, may be used to vary the distance dynamically, providing flexibility to adapt the system to specific operating conditions or design constraints.

This approach allows for precise tuning of the snubber circuit's performance, ensuring optimal suppression of voltage overshoot and ringing time across a range of applications. By enabling adjustable coupling, the method supports the design of versatile power systems that can accommodate diverse requirements while maintaining stability and efficiency.

In one embodiment of the present disclosure, the method further comprises producing a qualified load current in the switching converter. By effectively suppressing voltage overshoot and minimizing ringing, the magnetic snubber circuit stabilizes the output current, ensuring consistent and reliable power delivery even in high-speed and high-power applications. This stability is particularly critical in systems requiring precise current regulation, such as motor drives or high-performance computing power supplies.

Stabilizing the load current prevents disruptions that could compromise sensitive loads or downstream circuits, enhancing the overall reliability and longevity of the converter.

The method may also include optimizing the snubber circuit parameters to align with the specific current requirements of the load, ensuring that the system delivers the desired performance under varying operating conditions.

Variations in this embodiment might include the use of self-tuning components that dynamically adjust to maintain a stable output current in systems with fluctuating loads. This capability enables the system to respond to changing conditions effectively, providing robust and reliable performance in demanding environments such as renewable energy systems or automotive power converters.

In one embodiment of the present disclosure, the method is applied to circuits that require suppression of voltage and/or current of high-bandwidth switches due to anticipated parasitic impedances. This provides a robust approach to managing transient effects associated with fast-switching environments. High-bandwidth switches, such as those utilizing Wide Band Gap (WBG) semiconductors, are particularly susceptible to oscillations caused by parasitic inductance and capacitance in the circuit layout. The magnetic snubber circuit mitigates these effects, ensuring stable operation even under demanding conditions.

By counteracting the impact of parasitics, the magnetic snubber circuit allows a user to maintain the performance advantages of high-bandwidth switches, such as reduced switching losses and increased efficiency. This capability is critical in advanced applications like aerospace systems or renewable energy inverters, where reliability and efficiency are critical. Implementations of this method may include tailored snubber designs to address specific parasitic characteristics of the circuit, such as varying coupling strengths or adjusted resistance values.

The present disclosure also relates to any combination of any of the embodiments relating to both method and system described herein.

The adaptability of this method supports its integration into a broad range of high-speed, high-power systems. By effectively managing parasitic-induced oscillations, the method ensures consistent performance and protects sensitive components, enhancing the overall reliability and functionality of the power converter.

*Reference numeral list*

| 100 | circuit drawing of a switching converter assembly comprising a magnetic snubber portion and a voltage conversion portion |
| 101 | magnetic snubber portion |
| 102 | voltage conversion portion |
| 103 | lower high-speed switch, $Q_2$, which may be a SiC MOSFET switch |
| 104 | upper high-speed switch, $Q_1$, which may be a SiC MOSFET switch |
| 105 | power loop DC link, $V_{DC}$ |
| 106 | bus capacitance, $C_{bus}$ |

107 resistive element, $R_1$
108 resistive element, $R_2$
109 resistive element, $R_3$
110 resistive element, $R_4$
111 bus resistive element, $R_{bus}$
112 bus inductance, $L_{bus}$
113 inductive coupling between magnetic loop and leak inductance of the main power loop
114 magnetic snubber portion planar winding internal resistance, $R_s$
115 magnetic snubber portion resistance, $R_{diss}$
200 second side of a circuit structure comprising a half-bridge on a first side and a magnetic snubber portion the second side.
201 planar inductance of the magnetic loop comprising a number of windings
202 surface resistive element
300 equivalent coupling circuit model with respect to FIG. 1
301 total resistance of the power loop, $R_{loop}$
302 magnetic snubber portion planar winding internal resistance, $R_s$
303 magnetic snubber portion resistance, $R_{diss}$
304 equivalent mutual circuit with respect to FIG. 1, using current controlled voltage sources
305 complex induced voltage source characterized by an oscillation frequency, a magnetic snubber current, and a mutual inductance
306 complex induced voltage source characterized by an oscillation frequency, an oscillation current, and a mutual inductance
307 magnetic snubber portion resistance, $R_{diss}$
308 magnetic snubber portion impedance reflected to the voltage conversion portion
400 three-dimensional view of a first side of a circuit structure comprising a power loop
401 power loop comprising stray inductance
402 capacitive element
403 second side of a circuit structure comprising a magnetic snubber portion
404 magnetic loop comprising a number of windings having a shape that matches the shape of the power loop
405 magnetic snubber portion surface mounted resistance connecting the innermost and outermost winding of the magnetic loop
500 voltage across the switch ($Q_2$), $V_{dc}$, as a function of time without a magnetic snubber portion
501 voltage across the switch ($Q_2$), $V_{dc}$, as a function of time with a magnetic snubber
502 time measured in $\mu$s
503 time measured in $\mu$s
504 voltage across the drain-source of switch ($Q_2$), $V_{ds}$, measured in V (volts)
505 voltage across the drain-source of switch ($Q_2$), $V_{ds}$, measured in V (volts)
506 voltage overshoot immediately after a switch-off event
507 ringing time following a switch-off event
508 voltage overshoot immediately after a switch-off event
509 ringing time following a switch-off event
600 measured voltage overshoot (%) as a function of magnetic snubber inductance ($\mu$H)
601 measured ringing time ($\mu$s) as a function of magnetic snubber inductance ($\mu$H)
602 inductance of the magnetic snubber, $L_s$, measured in $\mu$H
603 inductance of the magnetic snubber, $L_s$, measured in $\mu$H
604 voltage overshoot, measured in excess percentage with respect to the steady-state value
605 ringing time measured in $\mu$s
606 data point from simulations of the voltage overshoot
607 data point from simulations of the ringing time
608 model graph as obtained by fitting to the voltage overshoot data points
609 model graph as obtained by fitting to the ringing time data points

**Examples**

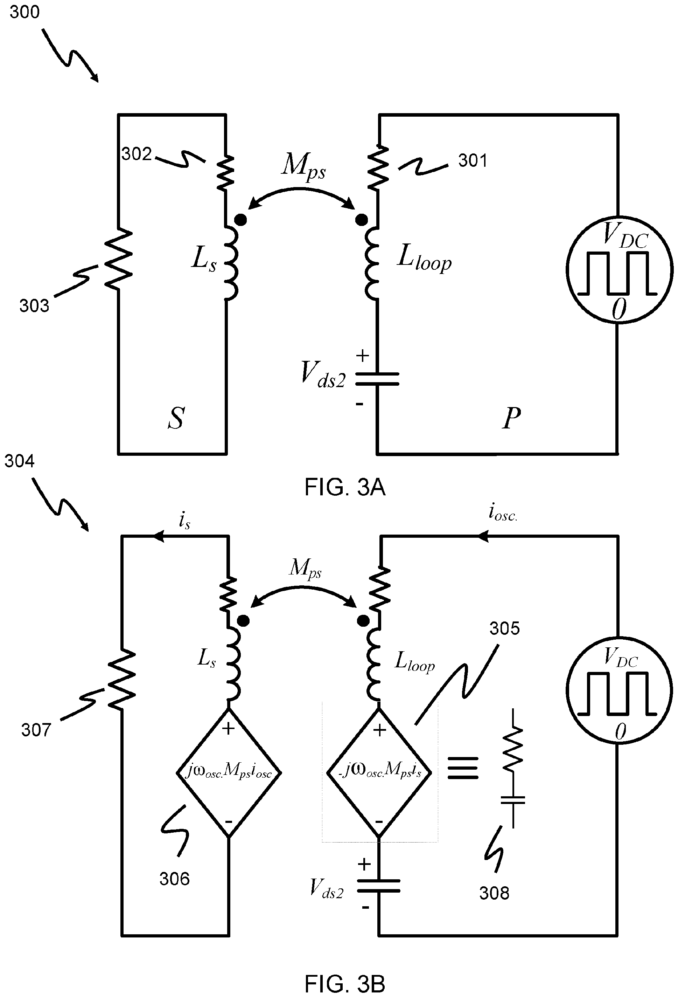

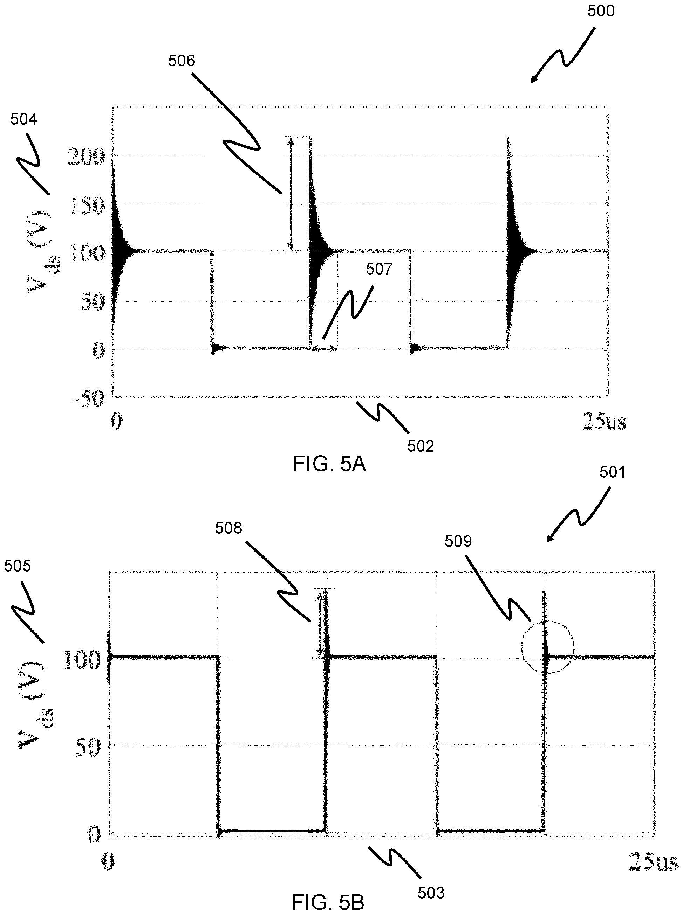

A detailed version of one embodiment of the present disclosure is shown in FIG. 1, with an equivalent circuit shown in FIG. 3. Results from the simulation of this circuit are shown in FIG. 5. Here we elaborate on this embodiment and associated results as an example implementation of the present disclosure.

A magnetic snubber portion comprised by the present disclosure is shown in FIG. 1. The magnetic snubber portion (100) comprises a planar inductance, $L_s$, comprising a number of windings, and a resistor, $R_{diss}$ (115), which dissipates most of the energy during ringing across the drain-source of the switch. The operation principle is based on magnetic induction, in a manner in which no capacitive elements induce any switching delay. Hence, the present snubber features zero delay, unlike conventional snubbers.

The present embodiment comprises two parts. The first part comprises a voltage conversion portion (102) comprising high-frequency switching components (103, 104) and distributed stray inductances, $L_{leak1-4}$. The second part comprises a magnetic snubber portion comprising a resistance (115) in series with a planar inductance, $L_s$, which is designed to inductively couple with the inductances of the voltage conversion portion, $M_{1s}$, $M_{2s}$, $M_{3s}$ and $M_{4s}$ (113). In the voltage conversion part the SiC MOSFET switch $Q_2$ (103) is considered as the component being tested. A double pulse test (DPT) is applied to the gate-source of $Q_2$ (103) and the voltage characteristic of $V_{ds2}$ can be investigated in the presence of stary inductance of the PCB layout ($L_{bus}$ (112) and $L_{leak1-4}$) and intrinsic capacitances of the MOSFETs.

The present switching converter assembly does not employ a capacitor in the magnetic snubber portion. This results in a high amount of virtual capacitive impedance in the voltage conversion portion, which reduces the voltage overshoot percentage and ringing time.

An equivalent coupling circuit model is shown in FIG. 3A. Here, the overall mutual inductance between the magnetic snubber portion and the voltage conversion portion is denoted by $M_{ps}$, which comprises all mutual inductances between the distributed stary inductances ($L_{leak1}$-$L_{leak4}$) and $L_s$.

Using an inductive-power-transfer-based (IPT-based) snubber in the circuit, the voltage and current of the magnetic snubber portion can be expressed as:

$$M_{ps} \frac{\partial i_{osc.}}{\partial t} = L_s \frac{\partial i_s}{\partial t} + R_s i_s + R_{diss} i_s. \qquad (1)$$

The ratio between the currents $i_{osc.}$ and $i_s$, which is used to formulating the reflected impedance to the voltage conversion portion, can be calculated in Laplace form based on Eq. (1) as:

$$\frac{i_s}{i_{osc.}} = \frac{j\omega_{osc.} M_{ps}}{(R_{diss}+R_s)+j\omega_{osc.} L_s}. \qquad (2)$$

Similarly, in the voltage conversion portion, the voltage and current can be calculated as:

$$u(t)V_{DC} = R_{loop} i_{osc.} + L_{loop} \frac{\partial i_{osc.}}{\partial t} + V_{ds2}, \qquad (3)$$

where,

$$i_{osc.} = C_{oss2} \frac{\partial V_{ds2}}{\partial t}. \qquad (4)$$

According to circuit model of FIG. 3A, which is shown by current control voltage sources in FIG. 3B, the magnetic snubber portion impedance reflected to the voltage conversion portion, $Z_{s,ref.}$ (308), can be calculated using (2) as:

$$Z_{s,ref.} = \frac{-j\omega_{osc.} M_{ps} i_s}{i_{osc.}} = \frac{\omega_{osc.}^2 M_{ps}^2}{(R_{diss}+R_s)+j\omega_{osc.} L_s}. \qquad (5)$$

The impedance (308), $Z_{s,ref.}$ has a real part, $R_{s,ref.}$, and imaginary part, $Im_{s,ref.}$, which can be calculated as:

$$R_{s,ref.} = \frac{\omega_{osc.}^2 M_{ps}^2 (R_{diss}+R_s)}{(R_{diss}+R_s)^2+(\omega_{osc.} L_s)^2}, \qquad (6)$$

$$Im_{s,ref.} = \frac{-j\omega_{osc.}^3 M_{ps}^2 L_s}{(R_{diss}+R_s)^2+(\omega_{osc.} L_s)^2}. \qquad (7)$$

From Eq. (7) it can be observed that $Im_{s,ref.}$ is equal to a virtual capacitor, $C_{vir.}$ with capacitance:

$$C_{vir.} = \frac{(R_{diss}+R_s)^2+(\omega_{osc.}L_s)^2}{\omega_{osc.}{}^4 M_{ps}{}^2 L_s} . \qquad (8)$$

Eq. (8) shows that the presently disclosed snubber effectively provides a capacitor during the transient time of the switch's turn-off, which decreases the ringing time and the voltage overshoot. The virtual capacitor reflected by the IPT-based snubber can compensate for most of the stary inductance in the voltage conversion portion.

As a result, the ringing time and voltage overshoot decrease due to the lower equivalent inductance in the loop. The circuit parameters, comprising the dissipation resistance in the magnetic snubber portion, $R_{diss}$, the self-inductance in the magnetic snubber portion, $L_s$, and the inductive coupling coefficient between the magnetic snubber portion and the voltage conversion portion (proportional to $M_{ps}$), can be used to further reduce, control, and tune the voltage overshoot.

In simulations the inductive coupling between the magnetic snubber portion and the voltage conversion portion can be modelled via the mutual inductance $M_{ps}$ as:

$$M_{ps} = K_{ps}\sqrt{L_{loop}L_s}. \qquad (9)$$

In FIG. 5 the results of simulating the switching converter assembly, both without (FIG. 5A) and with (FIG. 5B) the magnetic snubber portion, are shown. Parameters used in the simulations are listed in Table. 1.

Table 1: Circuit parameters used in the simulations of FIG. 5 and for the experimental implementation of FIG. 2.

| Parameter | Description | Value |
|---|---|---|
| $L_{loop}$ | Stray inductance of the power loop | 200nH |
| $R_{loop}$ | Resistance of the main(primary) circuit | 0.5Ω |
| $K_{ps}$ | Inductive coupling coefficient | 0.45 |
| $L_s$ | Magnetic snubber inductance | 1.6μH |
| $R_{diss}$ | Magnetic snubber dissipating resistor | 1.2Ω |
| $V_{DC}$ | DC link voltage | 100V |
| $i_{load}$ | Maximum load current | 15A |
| $L_{load}$ | Load inductance (inductance in DPT test) | 220μH |
| $C_{ds}$ | Drain-source capacitor of the switch | 19pF |
| $C_{gs}$ | Gate-source capacitor of the switch | 444pF |
| $C_{gd}$ | Gate-drain capacitor of the switch | 16pF |
| $Q_1, Q_2$ | Leg switches SiC MOSFET | SCT3120AL |

As shown in FIG. 5A, with respect to a DC steady-state voltage of 100V, the voltage overshoot percentage without the magnetic snubber portion (506) is 110%, whereas the voltage overshoot percentage with the magnetic snubber portion (508) is 34%. This demonstrates a significant reduction in the voltage overshoot by including the magnetic snubber portion of the present disclosure.

The impact of including the magnetic snubber portion on the ringing time, for the aforementioned choice of parameters, is also demonstrated in FIG. 5A (not comprising a magnetic snubber portion) and FIG. 5B (comprising a magnetic snubber portion). Without a magnetic snubber portion, the ringing time (507) immediately following a switch-off event is approximately 1.6 μs. For a circuit assembly comprising a magnetic snubber portion, on the other hand, the resulting ringing time is estimated to 0.4 μs. This corresponds to a reduction of 75% in ringing time and clearly demonstrates a significant effect posed by the magnetic snubber portion of the present disclosure.

The effect of changing the inductance of the magnetic snubber portion on the resulting voltage overshoot and the ringing time is shown in FIG. 6A and FIG. 6B, respectively. The figure comprises both data points from simulations (606, 607), as well as a fitted model graph that displays trends revealed by the data points. The model graph of FIG. 6A shows that the voltage overshoot percentage drops rapidly from around 40% to around 30% as the magnetic snubber inductance increases from an amount close to zero (200nH) to a value around that of the main power loop. Beyond this inductance value, the overshoot percentage increases to around 35% for an inductance of around 10μH. In the model graph of FIG. 6B it is shown that the ringing time rapidly increases from the nano second range to around 1.6 μs when the magnetic snubber inductance increases from a value close to zero (200nH) to the order of 10μH.

Other parameters that may be varied to influence the voltage overshoot percentage and ringing time comprise the magnetic snubber portion dissipative resistance, $R_{diss}$, and the planar inductive coupling, $K_{ps}$. Simulations show that increasing the planar inductive coupling is an effective way to reduce the voltage overshoot percentage.

In FIG. 2 an experimental implementation that demonstrates one embodiment of the present disclosure is shown. The experimental setup is based on the DPT circuit of FIG. 1. The test bench comprises a DPT generator which applies only two adjustable gating pulses to the half-bridge PCB board shown in FIG. 2, in which the backside comprises a magnetic snubber portion. The PCB contains two layers, a top layer and a bottom layer, separated by a distance of $Z=1.6mm$. The switches $Q_1$ and $Q_2$ are SiC MOSFETs (part number: SCT3120AL), which turn on/off with gate on/off resistor of $R_{g,on}=12\Omega$ and $R_{g,off}=7\Omega$, respectively. The top layers of both PCBs comprise a half-bridge as the voltage conversion portion. The intrinsic capacitances including an input capacitance ($C_{iss}$), an output capacitance ($C_{oss}$), and a reverse transfer capacitance ($C_{rss}$) can be obtained from the MOSFET's datasheet, enabling calculation of capacitances $C_{gs}$, $C_{gd}$, and $C_{ds}$.

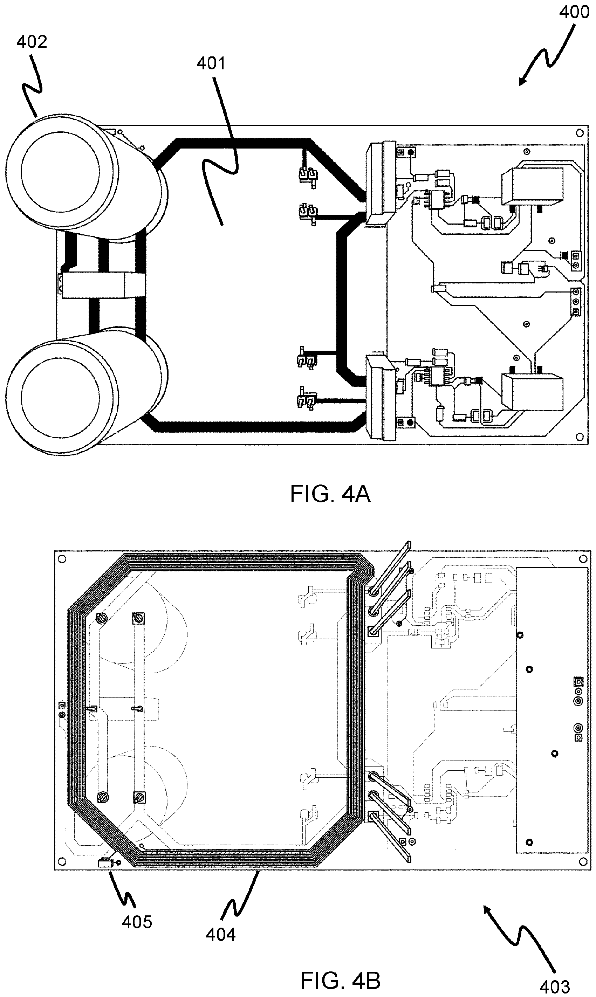

In FIG. 4A and FIG. 4B a three-dimensional (3D) model of the embodiment shown in FIG. 2 is shown. Here, the stray inductance of the main circuit or primary power loop, $L_{loop}$, is 200nH, which is obtained by simulating the same size layout in 3D Ansys/Maxwell. Similarly, the magnetic snubber portion inductance, $L_s$ is simulated in the 3D Ansys software, where the amount of $L_s=1.6\mu H$ can be obtained. In addition, the inductive coupling coefficient for airgap distance of $Z=1.6mm$ can be determined to be $K_{ps}=0.45$. Here, $R_{diss}=1.2\Omega$ is connected to the snubber winding to dissipate the energy transferred from the first side instead of being dissipated by the first side's switches. All other parameters in this test are listed in Table 1.

**Items**

1. A switching converter assembly comprising:

   a circuit structure;
   a voltage conversion portion comprising at least one high-speed switch and a power loop configured for converting an input voltage to an output voltage, wherein the power loop is arranged on a first side of the circuit structure;
   a magnetic snubber portion configured to suppress a voltage overshoot and a ringing time caused by distributed stray inductance in the power loop and the turning off of the high speed switch, the magnetic snubber portion comprising:
   a magnetic loop possessing a planar inductance connected in series to a resistive element, wherein the magnetic loop is arranged on a second side of the circuit structure or in a secondary circuit structure isolated from the circuit structure.

2. The system according to item 1, wherein the magnetic loop has substantially the same shape as the power loop.

3. The system according to any one of the preceding items, wherein the magnetic loop is located directly above or below the power loop.

4. The system according to any one of the preceding items, wherein the circuit structure and the magnetic snubber portion are implemented into a first and a second side of a double layer PCB, respectively.

5. The system according to any one of the preceding items, wherein the power loop on the first side of the circuit structure further comprises a DC link, a leg of the high-speed switch, and a power track that connects the leg of the high-speed switch to the DC link.

6. The system according to any one of the preceding items, wherein the at least one high-speed switch is of the type Wide Band Gap (WBG) switches, comprising either SiC or GaN MOSFET.

7. The system according to any one of the preceding items, wherein the resistive element is a Surface Mounted Device (SMD) resistor.

8. The system according to any one of the preceding items, wherein the power loop comprises at least one DC/DC converter or at least one DC/AC inverter.

9. The system according to any one of the preceding items, wherein the magnetic loop is magnetically coupled to the power loop via planar or inductive coupling techniques.

10. The system according to any one of the preceding items, further comprising self-tuning electrical components to dynamically adjust the resistance or planar inductance based on real-time switching conditions.

11. The system according to any one of the preceding items, wherein a turn-on or turn-off time in the high-speed switch with the magnetic snubber portion is substantially comparable to a turn-on or turn-off time in the high-speed switch without the magnetic snubber portion, respectively.

12. The system according to any one of the preceding items, wherein a snubber time constant, defined as the ratio of the snubber circuit inductance to the magnetic snubber portion resistance, is substantially shorter than a switching period of the at least one high-speed switch.

13. The system according to any one of the preceding items, wherein the magnetic loop comprises a number of windings, wherein the number of windings is chosen to maximize an inductive coupling between the power loop and the magnetic loop.

14. The system according to any one of the preceding items, wherein an inductive coupling between the magnetic loop and the power loop is at least 0.1, preferably at least 0.5, most preferably at least 0.9.

15. The system according to any one of the preceding items, wherein the voltage overshoot of the at least one high-speed switch is at most 40% higher than the maximum voltage in steady state, preferably at most 20% higher than the maximum voltage in steady state, most preferably at most 10% higher than the maximum voltage in steady state.

16. The system according to any one of the preceding items, wherein the ringing time, defined as the time elapsed from a turn on of the high-speed switch until the output voltage has entered and remains within a specified error band of the steady state value, is substantially reduced relative to non-snubber configurations.

17. The system according to any one of the preceding items, wherein the frequency of the at least one high-speed switch is at least 1kHz, preferably at least 10kHz, most preferably at least 100kHz.

18. The system according to any one of the preceding items, wherein the power of the high-speed switch is at least 100W, preferably at least 1kW.

19. The system according to any one of the preceding items, wherein a maximal load current of the voltage conversion portion is at least 1A, preferably at least 10A.

20. The system according to any one of the preceding items, wherein multiple magnetic snubber portions are arranged in series or parallel in high-power applications.

21. A method for suppressing a voltage overshoot and a ringing time in a switching converter comprising at least one high-speed switch and a power loop, comprising the steps of:

converting an input voltage to an output voltage using the switching converter, wherein the power loop is arranged on a first side of a circuit structure;
suppressing the voltage overshoot and the ringing time caused by distributed stray inductance in the power loop and the turning off of the high-speed switch using a magnetic loop possessing a planar inductance connected in series to a resistive element, the magnetic loop arranged on a second side of the circuit structure or in a secondary circuit structure isolated from the circuit structure.

22. The method according to item 21, further comprising the magnetic loop having a number of windings of substantially the same shape as the power loop of the circuit structure.

23. The method according to any one of the preceding items 21-22, further comprising implementing the circuit structure and the magnetic snubber portion into a first and a second side of a double layer PCB, respectively.

24. The method according to any one of the preceding items 21-23, further comprising choosing a resistance and planar inductance of the magnetic snubber portion to minimize the voltage overshoot and/or the ringing time.

25. The method according to any one of the preceding items 21-24, further comprising controlling the voltage overshoot and/or ringing time by adjusting the distance between the magnetic loop and the power loop.

26. The method according to any one of the preceding items 21-25, for producing a qualified load current in the switching converter.

27. The method according to any one of the preceding items 21-26, as applied to circuits that require suppression of voltage and/or current of high-bandwidth switches due to anticipated parasitic impedances.

**Claims**

1.  A switching converter assembly comprising:

    a circuit structure;
    a voltage conversion portion comprising at least one high-speed switch and a power loop configured for converting an input voltage to an output voltage, wherein the power loop is arranged on a first side of the circuit structure;
    a magnetic snubber portion configured to suppress a voltage overshoot and a ringing time caused by distributed stray inductance in the power loop and the turning off of the high speed switch, the magnetic snubber portion comprising:
    a magnetic loop possessing a planar inductance connected in series to a resistive element, wherein the magnetic loop is arranged on a second side of the circuit structure or in a secondary circuit structure isolated from the circuit structure.

2.  The system according to claim 1, wherein the magnetic loop has substantially the same shape as the power loop.

3.  The system according to any one of the preceding claims, wherein the magnetic loop is located directly above or below the power loop.

4.  The system according to any one of the preceding claims, wherein the circuit structure and the magnetic snubber portion are implemented into a first and a second side of a double layer PCB, respectively.

5.  The system according to any one of the preceding claims, wherein the at least one high-speed switch is of the type Wide Band Gap (WBG) switches, comprising either SiC or GaN MOSFET.

6.  The system according to any one of the preceding claims, wherein the power loop comprises at least one DC/DC converter or at least one DC/AC inverter.

7.  The system according to any one of the preceding claims, wherein a turn-on or turn-off time in the high-speed switch with the magnetic snubber portion is substantially comparable to a turn-on or turn-off time in the high-speed switch without the magnetic snubber portion, respectively.

8.  The system according to any one of the preceding claims, wherein a snubber time constant, defined as the ratio of the snubber circuit inductance to the magnetic snubber portion resistance, is substantially shorter than a switching period of the at least one high-speed switch.

9.  The system according to any one of the preceding claims, wherein the magnetic loop comprises a number of windings, wherein the number of windings is chosen to maximize an inductive coupling between the power loop and the magnetic loop.

10. The system according to any one of the preceding claims, wherein the ringing time, defined as the time elapsed from a turn on of the high-speed switch until the output voltage has entered and remains within a specified error band of the steady state value, is substantially reduced relative to non-snubber configurations.

11. The system according to any one of the preceding claims, wherein multiple magnetic snubber portions are arranged in series or parallel in high-power applications.

12. A method for suppressing a voltage overshoot and a ringing time in a switching converter comprising at least one high-speed switch and a power loop, comprising the steps of:

converting an input voltage to an output voltage using the switching converter, wherein the power loop is arranged on a first side of a circuit structure;

suppressing the voltage overshoot and the ringing time caused by distributed stray inductance in the power loop and the turning off of the high-speed switch using a magnetic loop possessing a planar inductance connected in series to a resistive element, the magnetic loop arranged on a second side of the circuit structure or in a secondary circuit structure isolated from the circuit structure.

13. The method according to claim 12, further comprising the magnetic loop having a number of windings of substantially the same shape as the power loop of the circuit structure.

14. The method according to any one of the preceding claims 12-13, further comprising implementing the circuit structure and the magnetic snubber portion into a first and a second side of a double layer PCB, respectively.

15. The method according to any one of the preceding claims 12-14, further comprising choosing a resistance and planar inductance of the magnetic snubber portion to minimize the voltage overshoot and/or the ringing time.

FIG. 1

FIG. 2

FIG. 3A

FIG. 3B

FIG. 4A

FIG. 4B

FIG. 5A

FIG. 5B

FIG. 6A

FIG. 6B

Europäisches
Patentamt

European
Patent Office

Office européen
des brevets

# EUROPEAN SEARCH REPORT

**Application Number**

EP 24 22 2749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU YANCHAO ET AL: "A Compact Inductively Coupled SiC MOSFET Snubber for Quasi-Zero-Voltage Turn-On, Switching Oscillation, and Voltage Spike Suppression", IEEE JOURNAL OF EMERGING AND SELECTED TOPICS IN POWER ELECTRONICS, IEEE, PISCATAWAY, NJ, USA, vol. 12, no. 3, 4 April 2024 (2024-04-04), pages 3135-3145, XP011971475, ISSN: 2168-6777, DOI: 10.1109/JESTPE.2024.3385477 [retrieved on 2024-04-05] * Section I. INTRODUCTION; Subsection III. B. Parameter Selection for Clamp Circuits; Subsection III. C. Parameter Selection for Inductively Coupled Snubber; Subsection III. D. Simulation and Realization of Inductively Coupled Coils; figures 1,8,10 *<br><br>----- | 1-15 | INV.<br>H02M3/156<br>H02M7/48<br>H02M1/34<br>H02M1/44<br>H02M1/00 |
| X | US 2021/057986 A1 (LEMMON ANDREW N [US] ET AL) 25 February 2021 (2021-02-25) * paragraph [0059]; figures 1,4 *<br><br>----- | 1 | **TECHNICAL FIELDS SEARCHED (IPC)**<br><br>H02M |
| X | EP 0 975 084 A2 (AJAX MAGNETHERMIC CORP [US]) 26 January 2000 (2000-01-26) * paragraph [0026]; figures 1,4 *<br><br>-----<br><br>-/-- | 1 | |

The present search report has been drawn up for all claims

| Place of search | Date of completion of the search | Examiner |
|---|---|---|
| The Hague | 16 May 2025 | Kanelis, Konstantin |

EPO FORM 1503 03.82 (P04C01)

page 1 of 3

Europäisches
Patentamt
European
Patent Office
Office européen
des brevets

**EUROPEAN SEARCH REPORT**

**Application Number**

EP 24 22 2749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM JAESUK ET AL: "A Damping Scheme for Switching Ringing of Full SiC MOSFET by Air Core PCB Circuit", IEEE TRANSACTIONS ON POWER ELECTRONICS, INSTITUTE OF ELECTRICAL AND ELECTRONICS ENGINEERS, USA, vol. 33, no. 6, 1 June 2018 (2018-06-01), pages 4605-4615, XP011678230, ISSN: 0885-8993, DOI: 10.1109/TPEL.2017.2731861 [retrieved on 2018-02-21] * Subsection II. B. Principle of the Proposed Resonant Damping Circuit.; figures 7,11 * | 1 | |
| X | YATSUGI KENICHI ET AL: "Ringing Suppression of SiC MOSFET Using a Strongly Coupled External Resonator Through Analogy With Passive PT-Symmetry", IEEE TRANSACTIONS ON POWER ELECTRONICS, INSTITUTE OF ELECTRICAL AND ELECTRONICS ENGINEERS, USA, vol. 36, no. 3, 1 August 2020 (2020-08-01), pages 2964-2970, XP011817127, ISSN: 0885-8993, DOI: 10.1109/TPEL.2020.3013399 [retrieved on 2020-10-26] * Subsection II. A. Circuit ConfigurationWe employed an inductive-load double-pulse test circuit.; figure 1a * | 1 | TECHNICAL FIELDS SEARCHED (IPC) |
| X | CN 119 171 859 A (UNIV TIANJIN POLYTECHNIC) 20 December 2024 (2024-12-20) * abstract; claim 7 * | 1 | |

-/--

The present search report has been drawn up for all claims

| Place of search | Date of completion of the search | Examiner |
|---|---|---|
| The Hague | 16 May 2025 | Kanelis, Konstantin |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EUROPEAN SEARCH REPORT**

Europäisches
Patentamt
European
Patent Office
Office européen
des brevets

Application Number

EP 24 22 2749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 131 581 B (UNIV HUNAN) 4 July 2023 (2023-07-04) * abstract; figures 2,3 * ----- | 1 | |
| X | CN 118 900 021 A (UNIV HUNAN) 5 November 2024 (2024-11-05) * abstract; figures 1,4 * ----- | 1 | |

TECHNICAL FIELDS
SEARCHED      (IPC)

The present search report has been drawn up for all claims

| Place of search | Date of completion of the search | Examiner |
|---|---|---|
| The Hague | 16 May 2025 | Kanelis, Konstantin |

EPO FORM 1503 03.82 (P04C01)

**EP 4 765 611 A1**

## ANNEX TO THE EUROPEAN SEARCH REPORT
## ON EUROPEAN PATENT APPLICATION NO.

EP 24 22 2749

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | | Publication date | Patent family member(s) | | Publication date |
|---|---|---|---|---|---|---|
| US 2021057986 | A1 | | 25-02-2021 | US 2021057986 A1 | | 25-02-2021 |
| | | | | US 2024151747 A1 | | 09-05-2024 |
| | | | | US 2025076346 A1 | | 06-03-2025 |
| | | | | WO 2019195357 A1 | | 10-10-2019 |
| EP 0975084 | A2 | | 26-01-2000 | CA 2267522 A1 | | 24-01-2000 |
| | | | | EP 0975084 A2 | | 26-01-2000 |
| | | | | JP 2000060139 A | | 25-02-2000 |
| | | | | US 6021053 A | | 01-02-2000 |
| CN 119171859 | A | | 20-12-2024 | NONE | | |
| CN 116131581 | B | | 04-07-2023 | NONE | | |
| CN 118900021 | A | | 05-11-2024 | NONE | | |

For more details about this annex : see Official Journal of the European Patent Office, No. 12/82